# EUROPEAN PATENT SPECIFICATION

(11) **EP 3 048 530 B1**
(45) Date of publication and mention of the grant of the patent: **01.03.2017**
(21) Application number: 15305082.8
(22) Date of filing: 26.01.2015
(51) Int. Cl.: G06F 9/50

(54) **CONTROL DEVICE AND METHOD FOR DEPLOYING AND REMOVING VOICE COMMUNICATION SYSTEM INSTANCES WHILE PROVIDING A MINIMUM SET OF TELEPHONY SERVICES**
STEUERGERÄT UND VERFAHREN ZUR VERTEILUNG UND ENTFERNEN VON INSTANZEN VON SPRACHKOMMUNIKATIONSSYTEM DIE GLEICHZEITIG EIN MINIMUM AN TELEFONDIENSTEN ZUR VERFÜGUNG STELLEN
DISPOSITIF DE COMMANDE ET PROCEDE DE DEPLOIEMENT ET RETRAIT DES INSTANCES D'UN SYSTEME DE COMMUNICATION VOCALE EN FOURNISSANT UN ENSEMBLE MINIMAL DE SERVICES DE TELEPHONIE

(43) Date of publication of application: 27.07.2016
(73) Proprietor: ALE INTERNATIONAL, 92700 Colombes (FR)
(72) Inventor: VERON, Sébastien, 67408 Illkirch Cedex (FR); ALBINET, Jean-Pierre, 67408 Illkirch Cedex (FR)
(74) Representative: Loyer & Abello

(56) References cited:
- EP-A1- 2 498 540
- EP-A1- 2 760 250
- EP-A2- 2 757 474
- US-A1- 2002 128 033

## Description

The present invention relates to cloud computing environments, and more specifically to deploying and removing voice communication system (VCS) instances in such environments and to providing a minimum set of telephony services when such VCS instances are removed.

### BACKGROUND OF THE INVENTION

Most cloud computing providers provide computing resources that can be purchased per hour, for example for computing, storage, bandwidth management, backup operations, or defining Virtual Private Networks. As a result, thanks to a cloud computing environment, Application Programming Interface (API) and orchestration mechanisms, it has become very easy for a company (which is a client of a cloud computing provider) to deploy at least one instance of a VCS by means of IP PBX (Internet Protocol Private Branch Exchange) or UC (Unified Communications) to offer services to its own customers and/or employees. However, when a company is deploying an instance of a VCS, the latter is usually up and running 24 hours a day, seven days a week, since it has generally to provide at least a minumum set of voice services, such as "closed office greetings", "emergency number" or "security services". This is clearly not cost-efficient.

An example of such a system is disclosed by the document EP2757474, Mitel Networks Corporation, published on 23 July 2014.

When a cloud computing provider wants to optimize the use of its resources in a cloud infrastructure in order to optimize its infrastructure costs while providing a minimum level of voice service for its clients when their offices are closed (i.e. during off hours), there are currently very few solutions.

A first solution may consist in "removing" during off hours instance(s) of the VCS in the cloud infrastructure. But in this case users of each removed instance will receive an "out of service" tone or message.

A second solution, implemented by public network providers, may consist in rerouting incoming calls to different service numbers or service voice guides based on scheduled calendars. But, such services are usually expensive, dependent on the public network provider and neither flexible nor scalable, and nor do they cover the need to maintain a minimum service for off-hours calls.

A third solution consists in proposing a multi-tenant solution that scales automatically depending on traffic and use of the telecommunication system. But this solution can be very complex to implement and requires a full multi-tenant communication system.

### SUMMARY OF THE INVENTION

An object of the present invention is to optimize the use of resources in a cloud environment, and the associated infrastructure costs, by deploying or removing VCS instances in such cloud environment, while providing a minimum set of telephony services when such VCS instances are removed.

More particularly the present invention provides a control means equipping a cloud infrastructure , said cloud infrastructure having a voice communication system instance (VCS) deployed or removed by an orchestration server , said VCS instance being coupled when deployed, to a public telecommunication network and a network , said control means being arranged either for controlling said orchestration server to deploy said VCS instance and routing a call originating from a communication device connected to said public telecommunication network to a communication device connected to said network through said VCS instance , when the control means is set to a first state during a first scheduled time interval, or, for controlling said orchestration server to remove said VCS instance, and providing a minimum set of telephony services in response to said call when the control means is set to a second state during a second scheduled time interval.

Such a control means may comprise one or more of the following features:
- The minimum set of telephony services comprises at least one of:
   a. said control means allowing a critical communication device connected to said network to register with it, and routing said call to said critical communication device ;
   b. said control means delivering back to said communication device , a recorded message; and
   c. said control means routing said call to a voice interactive answering system.
- The control means is coupled to a multi-tenant interface also equipping said cloud infrastructure and allowing a communication administrator to define said first and second scheduled time intervals, and said minimum set of telephony services.
- The control means is arranged to control said orchestration server to store data relative to said VCS instance when deployed and before it is removed, and to restore part or all of said stored data before deploying VCS instance back.
- A defined API with orchestration server allows control means to control orchestration server in relation to a plurality of VCS instances.

The invention also provides a method comprising the steps of:
- deploying during a first time interval a voice communication system instance (VCS) in a cloud infrastructure, coupled to a public telecommunication network and a network, and allowing for telephony communications between a communication device connected to said public telecommunication network and a communication device connected to said network, and
- removing during a second time interval said voice communication system instance (VCS), and providing through a control means equipping said cloud infrastructure and coupled to said public telecommunication network, a set of minimum telephony services in response to a call from said communication device.

Such a method may also comprise the following feature:
- The minimum set of telephony services comprises at least one of
   a. allowing a communication device connected to said network to register as a critical communication device, and routing said call to said critical communication device ;
   b. delivering back to said communication device , a recorded message; and
   c. routing said call to a voice interactive answering system.

### BRIEF DESCRIPTION OF THE DRAWINGS

Other features and advantages of the invention will become apparent on examining the detailed specifications hereafter and the appended drawings, wherein:
- figure 1 schematically and functionally illustrates a telecommunications installation according to the invention, set in a first state in which full telephony services are provided between a public telecommunication network and another network, through a VCS, and
- figure 2 schematically and functionally illustrates the telecommunications installation of figure 1, set in a second state in which the VCS is removed and a minimum set of telephony services is provided in response to a call from the public telecommunication network.

### DETAILED DESCRIPTION OF EMBODIMENTS

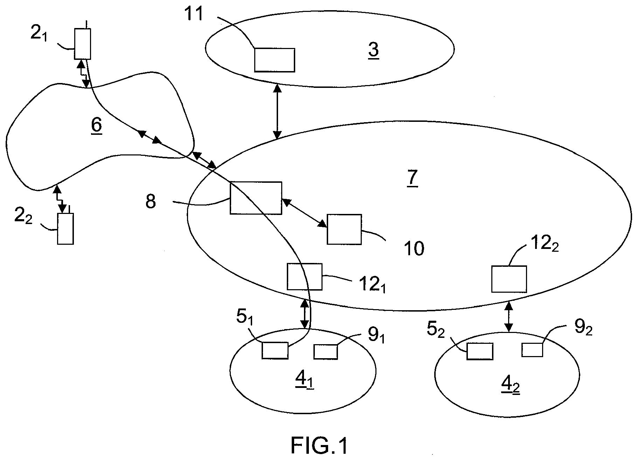

A telecommunications installation according to the present invention is illustrated in figure 1. The telecommunications installation includes a cloud infrastructure 7, a VCS provider 3 comprising an orchestration server 11, a public telecommunication network 6, and two networks 4₁ and 4₂.

It will be apparent to the person skilled in the art that the number of networks 4ᵢ could range from 1 to a large number, and that the depiction of two of them is merely for illustration purposes. Networks 4ᵢ could belong to different owners, such as separate companies, or to the same owner or company having for example a network 4ᵢ in each physical location where it has personnel.

The VCS provider 3 is coupled to the cloud infrastructure 7 and provides instances of VCS 12ᵢ. (only VCS instances 12₁ and 12₂ are represented on figure 1). A VCS defines computing resources that can be purchased on-demand by the user or client of cloud infrastructure 7 for communications purposes.

To each network 4ᵢ corresponds a VCS instance 12ᵢ located in the cloud infrastructure 7 and that is notably deployed by VCS provider 3 as a dedicated instance. For example, said instance 12ᵢ may be an IP PBX or a server offering UC.

It will be apparent to the person skilled in the art that several networks 4ᵢ could correspond to the same VCS instance 12ᵢ without departing from the scope of the invention.

As shown on figure 1, the public telecommunication network 6 is coupled to VCS instance 12₁ and allows communication devices 2₁ and 2₂ to make calls through VCS instance 12₁. Public telecommunication network 6 may comprise a wireless communication infrastructure and/or a wired communication infrastructure.

It will be apparent to the person skilled in the art that the number of communication devices 2ᵢ could range from 1 to a large number, and that the depiction of two of them is merely for illustration purposes.

The network 4₁ is coupled to VCS instance 12₁, and allows communication device 5₁ and critical communication device 9₁ that are connected to it, to receive calls through VCS instance 12₁.

It will be apparent to the person skilled in the art that the number of communication devices 5ᵢ or 9ᵢ could range from 1 to a large number in each network 4ᵢ, and that the depiction on figure 1 of one of them in each category for network 4₁ is merely for illustration purposes.

Communication devices 5ᵢ or critical communication devices 9ᵢ may be, for example, media gateways or wired telephone sets.

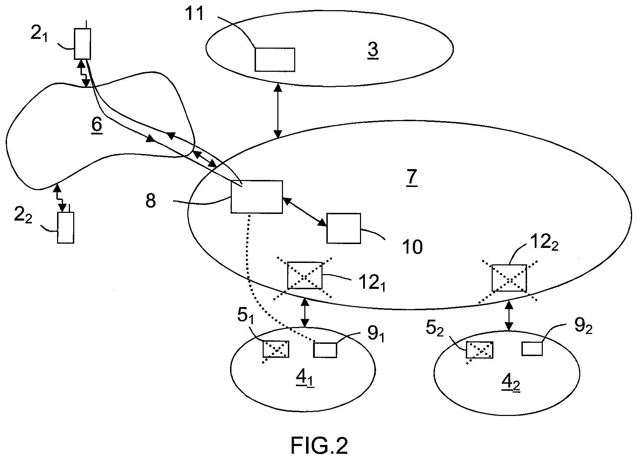

Control means 8 equips the cloud infrastructure 7 and is coupled to the public telecommunication network 6 at all times. Control means 8 is arranged either for routing a call originating from the public telecommunication network 6 and incoming from a communication device 2₁, and intended for a communication device 5₁ of network 4₁ through VCS instance 12₁ when it is set to a first state during a first scheduled time interval (as illustrated figure 1), or for removing the VCS instance 12₁ yet providing a minimum set of telephony services (as defined below in relation to figure 2) during a second scheduled time interval.

Now, and as illustrated in figure 1, when the control means 8 is set to the first state during the first scheduled time interval, a VCS instance 12ᵢ is temporarily deployed into the cloud infrastructure 7 and the control means 8 routes each incoming call to the relevant newly deployed VCS instance 12ᵢ. In that case the control means 8 is bypassed (or is transparent).

During that first scheduled time interval, control means 8 may equally route a call originating from the public telecommunication network 6 and incoming from a communication device 2ᵢ onto a communication device 5ᵢ or a critical communication device 9ᵢ.

For example, a first scheduled time interval is a time interval during which offices of a company which owns a network 4ᵢ are accessible to customers or other calling parties (i.e. "on hours"), while a second scheduled time interval is a time interval during which offices of a company are not accessible to customers or other calling parties (i.e. "off hours").

Control means 8 is thus a telephony service front-end in a cloud infrastructure, which allows to optimize the use of cloud provider resources, and the associated infrastructure costs, while providing a minimum set of telephony services during scheduled time intervals.

The orchestration server 11 also equips cloud infrastructure 7 which deploys or removes VCS instances 12ᵢ. Orchestration server 11 is controlled by control means 8, in one of several possible ways: for example, in "push" mode where control means 8 instructs orchestration server 11 to deploy or remove VCS instances 12ᵢ, or in "pull" mode where orchestration server 11 obtains time scheduling information from control means 8, to deploy or remove VCS instances 12ᵢ during and according to the first and second scheduled time intervals.

Finally an optional multi-tenant interface 10 may also equip cloud infrastructure 7, coupled to control means 8 and arranged for allowing a communication administrator to for example define the first and second scheduled time intervals, the strategies of routing calls (during the first and second scheduled time intervals), and/or the exact services to be included in the minimum set of telephony services during the second scheduled time interval. Multi-tenant interface 10 may be a web multi-tenant interface, for example. Control may be achieved through programming scripts which run on control means 8.

Figure 2 illustrates when the control means 8 is set to its second state during a second scheduled time interval. The same reference numerals as in figure 1 indicate the same elements. When the VCS instance 12₁ is temporarily removed from the cloud infrastructure 7, the control means 8 provides a minimum set of telephony services.

A minimum set of telephony services is to be understood as comprising at least one of the following functions in response to a call originating from the public telecommunication network 6 and incoming from a communication device 2ᵢ: playing recorded messages such as welcome greetings or out-of-office notices, making available voice interactive server and automated attendant, and routing said call to a critical communication devices 9ᵢ, as a communication device that requires phone services 24/24h and 7/7 days in network 4ᵢ.

Orchestration server 11, controlled by control means 8, removes VCS instance 12₁ at the expiration of the first scheduled time interval, and deploys a new VCS instance 12₁ at the expiration of the second scheduled time interval.

Orchestration server 11 may also be arranged for storing or backing up data relative to a VCS instance 12ᵢ (and notably accounting data and dynamic configuration data such as forwarding) before removing it, in order to be able to restore part or all of stored data before deploying VCS instance 12ᵢ back. This storing and backing up may be done in a dedicated storage instance.

When VCS instance 12₁ is removed, communication device 5₁ and critical communication device 9₁ are not connected anymore (for example they lose their Session Initiation Protocol (SIP) registration) and they both detect that VCS instance 12₁ has been removed (for example through a mechanism of "keep alive").

Only critical communication device 9₁ automatically registers with control means 8 (for example on another "call server Internet Protocol (IP) address" or "proxy SIP address").

Control means 8 may be arranged for routing a call originating from the public telecommunication network 6 and incoming from a communication device 2₁, and intended for the critical communication device 9₁ of network 4₁ to such critical communication device 9₁ during the second scheduled time interval. This is one of the possible features in the set of minimum telephony services.

Control means 8 may also be arranged, in response to a call originating from the public telecommunication network 6 and incoming from a communication device 2₁, and intended for the communication device 5₁ of network 4₁, to deliver back to communication device 2₁, a recorded message such as "out of office" message during the second scheduled time interval. This is another one of the possible features in the set of minimum telephony service.

API may be defined at the interface between orchestration server 11 and control means 8. This allows the automation of either or both of the deployment or removal of VCS instances 12ᵢ, and for storing or restoring data relative to a VCS instance 12ᵢ.

Parameters, fields and values exchanged at the API may be defined so that a single control means 8 controls the orchestration server 11 in relation to a plurality of VCS instances 12ᵢ having each an associated set of first and second scheduled time intervals. Similarly, individual data storing and restoring schemes may be associated with each of a plurality of VCS instances 12ᵢ through a single control means 8 controlling orchestration server 11.

The present invention proposes also notably a method for deploying and removing VCS instances 12ᵢ dedicated to networks 4ᵢ.

When deployed during a first time interval, each VCS instance 12ᵢ is connected to a public telecommunication network 6 and a network 4ᵢ via a cloud infrastructure 7. This allows telephony communications between a communication device 2ᵢ connected to the public telecommunication network 6, and a communication device 5ᵢ or 9ᵢ connected to the network 4ᵢ.

When VCS instance 12ᵢ is removed during a second time interval, a control means 8 provides the set of minimum telephony services in response to a call of the communication device 2ᵢ.

Such scheduling may be for example in relation to the opening hours of a company by using specific scripts running on the control means 8 providing the minimum set of telephony services.

This method also includes a step of allowing to register on the control means 8 at least one critical telephone set 9ᵢ such that during the second time interval, telephony communications may take place between it and a communication device 2ᵢ connected to the public telecommunication network 6.

This deployment and removals of VCS instances 12ᵢ thereby allows optimization of the cloud infrastructure 7 in terms of computing power and memory and therefore in terms of hosting cost.

The said method may be physically implemented in a data center providing cloud facilities, through a computer program comprising a set of instructions running on processing units of said datacenter (comprising control means 8), and which may be arranged, when executed, for performing the method described above.

The control means 8 may be made of software modules. It may be part of an item of network equipment or may form an item of network equipement. It can be stored in a memory of an item of equipment of the cloud infrastructure 7.

The control means 8 may be distributed in a plurality of items of network equipments.

As the control means 8 are deployed in the cloud infrastructure, they can take advantage of all the cloud features, and notably scalability, elasticity, performance, reliability compared to the traditionnal service provided by a public network service provider. Moreover, the invention allows to optimize cloud infrastructure costs by taking advantage of a cloud provider pay-per-hour pricing model. Moreover, the invention allows the end client to itself manage its own calendar (i.e. its first and second scheduled time intervals).

## Claims

1. A control means (8) equipping a cloud infrastructure (7), said cloud infrastructure (7) having a voice communication system instance, hereinafter referred as to VCS, (12ᵢ) deployed or removed by an orchestration server (11), said VCS instance (12ᵢ) being coupled when deployed, to a public telecommunication network (6) and a network (4ᵢ), said control means (8) being arranged either for controlling said orchestration server (11) to deploy said VCS instance (12ᵢ) and routing a call originating from a communication device (2ᵢ) connected to said public telecommunication network (6) to a communication device (5ᵢ, 9ᵢ) connected to said network (4i) through said VCS instance (12ᵢ), when the control means (8) is set to a first state during a first scheduled time interval, or, for controlling said orchestration server (11) to remove said VCS instance (12ᵢ), and providing a minimum set of telephony services in response to said call when the control means (8) is set to a second state during a second scheduled time interval.

2. The control means (8) of claim 1, in which the minimum set of telephony services comprises at least one of:
a. said control means (8) allowing a critical communication device (9ᵢ) connected to said network (4ᵢ) to register with it, and routing said call to said critical communication device (9ᵢ);
b. said control means (8) delivering back to said communication device (2ᵢ), a recorded message; and
c. said control means (8) routing said call to a voice interactive answering system.

3. The control means (8) of claim 1 or claim 2, coupled to a multi-tenant interface (10) also equipping said cloud infrastructure (7) and allowing a communication administrator to define said first and second scheduled time intervals, and said minimum set of telephony services.

4. The control means (8) of any of the claims 1 to 3, being arranged to control said orchestration server (11) to store data relative to said VCS instance (12ᵢ) when deployed and before it is removed, and to restore part or all of said stored data before deploying VCS instance (12ᵢ) back.

5. The control means (8) of any of the claims 1 to 4, wherein a defined API with orchestration server (11) allows control means (8) to control orchestration server (11) in relation to a plurality of VCS instances (12ᵢ).

6. A method comprising the steps of:
- deploying during a first time interval a voice communication system instance, hereinafter referred as to VCS (12ᵢ) in a cloud infrastructure (7), coupled to a public telecommunication network (6) and a network (4i), and allowing for telephony communications between a communication device (2ᵢ) connected to said public telecommunication network (6) and a communication device (5ᵢ, 9ᵢ) connected to said network (4i), and
- removing during a second time interval said VCS (12ᵢ), and providing through a control means (8) equipping said cloud infrastructure (7) and coupled to said public telecommunication network (6), a set of minimum telephony services in response to a call from said communication device (2ᵢ).

7. The method of claim 6 in which the minimum set of telephony services comprises at least one of:
a. allowing a communication device (9ᵢ) connected to said network (4i) to register as a critical communication device, and routing said call to said critical communication device (9ᵢ);
b. delivering back to said communication device (2ᵢ), a recorded message; and
c. routing said call to a voice interactive answering system.

## Patentansprüche

1. Eine Steuerungsvorrichtung (8) zur Ausstattung einer Cloud-Infrastruktur (7), umfassend eine Sprachkommunikationssystem-Instanz, im Folgenden als VCS (12ᵢ) bezeichnet,
die durch einen Orchestrierungsserver (11) an- oder abgeschaltet wird, wobei die VCS-Instanz beim Einschalten mit einem öffentlichen Telekommunikationsnetz (6) und einem Netzwerk (4ᵢ) verbunden wird, wobei die Steuerungsvorrichtung (8) vorgesehen wird entweder zur Steuerung des Orchestrierungsservers (11) zum Einschalten der VCS-Instanz (12ᵢ) und zur Weiterleitung eines Anrufs von einer Kommunikationseinrichtung (2ᵢ), die mit dem öffentlichen Telekommunikationsnetz (6) verbunden ist, an eine Kommunikationseinrichtung (5ᵢ, 9ᵢ), die mit dem Netzwerk (4ᵢ) durch die VCS-Instanz (12ᵢ) verbunden ist, sobald die Steuerungsvorrichtung (8) während eines ersten festgelegten Zeitintervalls in einen ersten Zustand geschaltet wird, oder zur Steuerung des Orchestrierungsservers (11) zum Abschalten der VCS-Instanz (12ᵢ) und Bereitstellen eines Mindestpakets an Telefoniediensten zur Beantwortung des Telefonanrufs, sobald die Steuerungseinrichtung (8) während eines zweiten festgelegten Zeitintervalls in einen zweiten Zustand geschaltet wird.

2. Steuerungsvorrichtung (8) gemäß Anspruch 1, wobei das Mindestpaket an Telefoniediensten zumindest eine der folgenden Funktionen umfasst:
a. die Steuerungsvorrichtung (8) lässt eine Anmeldung einer mit dem Netzwerk (4ᵢ) verbundenen kritischen Kommunikationseinrichtung (9ᵢ) zu, und leitet den Anruf weiter an die kritische Kommunikationseinrichtung (9ᵢ);
b. die Steuerungsvorrichtung (8) sendet eine aufgezeichneten Nachricht an die Kommunikationseinrichtung (2ᵢ) zurück; und
c. die Steuerungseinrichtung (8) leitet den Anruf an ein sprach-interaktives Anrufbeantwortersystem weiter.

3. Steuerungsvorrichtung (8) gemäß Anspruch 1 oder Anspruch 2, verbunden mit einem Multi-Tenant-Interface (10), welches ebenfalls der Cloud-Infrastruktur (7) hinzugefügt wird und womit ein Kommunikationsadministrator den ersten und den zweiten festgelegten Zeitintervall sowie das Mindestpaket an Telefonie definieren kann.

4. Steuerungsvorrichtung (8) gemäß einem der Ansprüche 1 bis 3, angeordnet zur Steuerung des Orchestrierungsservers (11) zum Speichern von Daten im Zusammenhang mit der VCS-Instanz (12ᵢ), sobald diese eingeschaltet und bevor sie abgeschaltet wird, und zum Wiederherstellen eines Teils oder aller gespeicherten Daten, bevor die VCS-Instanz (12ᵢ) wieder eingeschaltet wird.

5. Steuerungsvorrichtung (8) gemäß einem der Ansprüche 1 bis 4, wobei es ein definierter API mit Orchestrierungsserver (11) der Steuerungsvorrichtung (8) ermöglicht, den Orchestrierungsserver (11) in Verbindung mit einer Vielzahl an VCS-Instanzen (12ᵢ) zu steuern.

6. Verfahren umfassend die folgenden Schritte:
- in einem ersten Zeitintervall Einschalten einer Sprachkommunikationssystem-Instanz, im Folgenden als VCS (12ᵢ) bezeichnet, in einer Cloud-Infrastruktur (7), die mit einem öffentlichen Telekommunikationsnetzwerk (6) und einem Netzwerk (4ᵢ) verbunden ist, und telefonische Kommunikation zwischen einer mit dem öffentlichen Telekommunikationsnetz (6) verbundenen Kommunikationseinrichtung (2ᵢ) und einer mit dem Netzwerk (4ᵢ) verbundenen Kommunikationseinrichtung (5ᵢ, 9ᵢ) ermöglicht, und
- in einem zweiten Zeitintervall Abschalten des VCS (12ᵢ), und Zurverfügungstellung eines Mindestpakets an Telefoniediensten zur Beantwortung eines Telefonanrufs von der Kommunikationseinrichtung (2ᵢ) durch eine mit dem öffentlichen Telekommunikationsnetzwerk (6) verbundene Steuerungsvorrichtung (8), mit der die Cloud-Infrastruktur (7) ausgestattet ist.

7. Verfahren gemäß Anspruch 6, wobei das Mindestpaket an Telefoniediensten zumindest eine der folgenden Funktionen umfasst:
a. Zulassen, dass eine mit dem Netzwerk (4ᵢ) verbundene Kommunikationseinrichtung (9ᵢ) sich als eine kritische Kommunikationseinrichtung anmeldet, und Weiterleitung des Anrufs an die kritische Kommunikationseinrichtung (9ᵢ);
b. Rücksenden einer aufgezeichneten Nachricht an die Kommunikationseinrichtung (2ᵢ); und
c. Weiterleiten des Anrufs an ein sprach-interaktives Anrufbeantwortersystem.

## Revendications

1. Moyen de commande (8) équipant une infrastructure en nuage (7), ladite infrastructure en nuage (7) ayant une instance de système de communication vocale, appelée ci-après VCS (12ᵢ) déployée ou retirée par un serveur d'orchestration (11), ladite instance VCS (12ᵢ) étant couplée, quand elle est déployée, à un réseau de télécommunication public (6) et à un réseau (4ᵢ), ledit moyen de commande (8) étant agencé pour commander ledit serveur d'orchestration (11) pour déployer ladite instance VCS (12ᵢ) et acheminer un appel provenant d'un dispositif de communication (2ᵢ) connecté audit réseau de télécommunication public (6) jusqu'à un dispositif de communication (5ᵢ, 9ᵢ) connecté audit réseau (4ᵢ) par l'intermédiaire de ladite instance VCS (12ᵢ), quand le moyen de commande (8) est réglé dans un premier état durant un premier intervalle de temps programmé, ou, pour commander ledit serveur d'orchestration (11) afin de retirer ladite instance VCS (12ᵢ), et fournir un ensemble minimum de services téléphoniques en réponse audit appel quand le moyen de commande (8) est réglé dans un second état durant un second intervalle de temps programmé.

2. Moyen de commande (8) selon la revendication 1, dans lequel l'ensemble minimum de services téléphoniques comprend au moins l'un parmi :
a. ledit moyen de commande (8) permettant à un dispositif de communication critique (9ᵢ) connecté audit réseau (4ᵢ) de s'enregistrer avec celui-ci, et acheminant ledit appel audit dispositif de communication critique (9ᵢ) ;
b. ledit moyen de commande (8) renvoyant audit dispositif de communication (2ᵢ) un message enregistré ; et
c. ledit moyen de commande (8) acheminant ledit appel jusqu'à un système de réponse interactive vocale.

3. Moyen de commande (8) selon la revendication 1 ou la revendication 2, couplé à une interface partagée (10) équipant également ladite infrastructure en nuage (7) et permettant à un administrateur de communication de définir lesdits premier et second intervalles de temps programmés, et ledit ensemble minimum de services téléphoniques.

4. Moyen de commande (8) selon l'une quelconque des revendications 1 à 3, étant agencé pour commander ledit serveur d'orchestration (11) afin de stocker des données relatives à ladite instance VCS (12ᵢ) quand elle est déployée et avant qu'elle ne soit retirée, et de rétablir une partie ou la totalité desdites données stockées avant le redéploiement de ladite instance VCS (12ᵢ).

5. Moyen de commande (8) selon l'une quelconque des revendications 1 à 4, dans lequel une API définie avec le serveur d'orchestration (11) permet au moyen de commande (8) de commander le serveur d'orchestration (11) par rapport à une pluralité d'instances VCS (12ᵢ).

6. Procédé comprenant les étapes consistant à :
- déployer durant un premier intervalle de temps une instance de système de communication vocale, appelée ci-après VCS (12ᵢ) dans une infrastructure en nuage (7), couplée à un réseau de télécommunication public (6) et à un réseau (4ᵢ), et permettre des communications téléphoniques entre un dispositif de communication (2ᵢ) connecté audit réseau de télécommunication public (6) et un dispositif de communication (5ᵢ, 9ᵢ) connecté audit réseau (4ᵢ), et
- retirer durant un second intervalle de temps ladite instance VCS (12ᵢ), et fournir par l'intermédiaire d'un moyen de commande (8) équipant ladite infrastructure en nuage (7) et couplé audit réseau de télécommunication public (6), un ensemble de services téléphoniques minimum en réponse à un appel provenant dudit dispositif de communication (2ᵢ).

7. Procédé selon la revendication 6 dans lequel l'ensemble minimum de services téléphoniques comprend au moins une action parmi :
a. permettre à un dispositif de communication (9ᵢ) connecté audit réseau (4ᵢ) de s'enregistrer en tant que dispositif de communication critique, et acheminer ledit appel jusqu'audit dispositif de communication critique (9ᵢ) ;
b. renvoyer audit dispositif de communication (2ᵢ) un message enregistré ; et
c. acheminer ledit appel à un système de réponse interactive vocale.
